# EUROPEAN PATENT APPLICATION

(11) **EP 4 790 310 A1**
(43) Date of publication of application: **12.08.2026**
(21) Application number: 25162681.8
(22) Date of filing: 10.03.2025
(51) Int. Cl.: F21S 41/143, F21S 41/147, F21S 41/24, F21S 41/27, F21S 41/20, F21S 41/32, B60Q 1/00, F21S 43/241

(54) **VEHICLE HEADLAMP ELEMENT, VEHICLE LAMP SYSTEM AND VEHICLE**

(30) Priority: 11.02.2025 CN 202510152796
(71) Applicant: ZKW Group GmbH, 3250 Wieselburg (AT)
(72) Inventor: Liu, Baize, Dalian, 116600 (CN)
(74) Representative: Patentanwaltskanzlei Matschnig & Forsthuber OG

(57) **Abstract**

Lamp element (1) for vehicles that provides a homogeneous triangular light shape. The vehicle lamp element (1) comprises a light fixture (2) and an optical body (4). The optical body (4) comprises an entrance surface (8), a deflection surface (9), a first boundary surface (10), a second boundary surface (11) and an exit surface (12). The entrance surface (8) and the exit surface (12) are inclined toward the deflection surface (9). The exit surface (12) is of triangular shape with a base (17), a first leg (18) and a second leg (19). The light fixture is configured to emit a collimated light beam (5) with a light dark boundary (20) towards the optical body (4), while said light dark boundary (20) is parallel to the base (17).

## Description

The invention relates to a vehicle lamp element.

Vehicle lamp elements are essential to the appearance and design of a vehicle. However, typical light sources, e.g. incandescent bulbs or LED light sources, generally have emission characteristics of an approximately point light source. This makes it challenging to design lamp elements with a triangular light output that is both homogeneously illuminated and optimized for light efficiency. These challenges are further compounded by the limited space available for such lamp elements.

It is therefore a task of the present invention to provide a lamp element for vehicles that enables a homogeneous triangular light shape.

This object is achieved by a vehicle lamp element that comprises a light fixture and an optical body, wherein the light fixture is configured to emit a collimated light beam towards the optical body, said collimated light beam comprises a light dark boundary, wherein the optical body comprises an entrance surface, a deflection surface, a first boundary surface, a second boundary surface and an exit surface, wherein the entrance surface is inclined toward the deflection surface and configured to refract at least a part of the collimated light beam including the light dark boundary as a refracted light beam towards the deflection surface, such that said refracted light beam comprises the light dark boundary, wherein the deflection surface is configured to deflect at least a part of the refracted light beam including the light dark boundary as a deflected light beam towards the exit surface, such that said deflected light beam comprises the light dark boundary, wherein the exit surface is of triangular shape with a base, a first leg and a second leg, said exit surface is inclined toward the deflection surface, adjacent with its first leg to the first boundary surface, adjacent with its second leg to the second boundary surface and configured to refract at least a part of the deflected light beam including the light dark boundary, wherein the base is parallel to the light dark boundary of the deflected light beam.

A "light dark boundary" refers in this context to the distinct transition line or region where an illuminated area meets a non-illuminated area.

There are various ways to emit a collimated light beam that includes a light dark boundary, but a very practicable option in this respect can be a light fixture that comprises a light source and a collimator, said light source is configured to emit a light beam and said collimator is configured to collimate and truncate at least a part of the light beam in order to form the collimated light beam comprising the light dark boundary.

The collimated light beam may propagate in a main central direction, while the light fixture is aligned to the optical body such that this main central direction is parallel to the deflection surface.

It may be provided that the triangular shape is an isosceles triangle, wherein the first leg and the second leg are of the same length.

Preferably the light fixture is aligned to the optical body such that the distance between the base of the exit surface and the light dark boundary of the deflected light beam at the exit surface is less than 0.5 mm.

It is possible that the angle between the entrance surface and the deflection surface as well as the angle between the exit surface and the deflection surface are between 40° and 50°.

To simplify the optical designing it is preferred, that the normal vector of the entrance surface and the normal vector of the exit surface are perpendicular to each other.

It is further possible and advantageous, when the entrance surface, the deflection surface and the exit surface are flat surfaces.

It may further be provided that the first boundary surface and the second boundary surface are adjacent to the entrance surface, such that both, the first boundary surface and the second boundary surface connecting the entrance surface and the exit surface.

Preferably, the optical body comprises further a connection surface which connects the exit surface and the deflection surface, wherein the angle between said connection surface and the deflection surface is greater or equal to 90°.

Preferably, the exit surface is textured, such that the exit surface is configured to refract diffusely at least a part of the deflected light beam including the light dark boundary.

It is possible that the vehicle lamp element comprises additionally an optical element that is arranged after the optical body from a light engineering of view, wherein said optical element is configured to scatter the light, which is refracted by the exit surface.

Furthermore, the invention relates to a vehicle lamp system, that comprises several vehicle lamp elements, wherein the vehicle lamp elements are stacked next to each other, such that neighboring vehicle lamp elements form together a common light output section and such that at least either the base, the first leg or the second leg of each vehicle lamp is adjacent to a neighboring vehicle lamp element.

It is possible that the second boundary surface of at least one vehicle lamp element of the vehicle lamp system faces the second boundary surface of a neighboring vehicle lamp element, preferably the second boundary surface of every vehicle lamp element faces the second boundary surface of its neighboring vehicle lamp element.

To realize a compact vehicle lamp system it is possible that the second boundary surface of the at least one vehicle lamp element contacts the second boundary surface of a neighboring vehicle lamp element, preferably the second boundary surface of every vehicle lamp element contacts the second boundary surface of its neighboring vehicle lamp element.

Furthermore, the invention relates to a vehicle, that comprises at least one vehicle lamp element or at least one vehicle lamp system.

The invention is explained in more detail below with reference to exemplary embodiments illustrated in drawings, which show in
Figure 1 the vehicle lamp element in a perspective view,
Figure 2 a first cross-sectional view of the vehicle lamp element,
Figure 3 the collimated light beam,
Figure 4 a simulation result at the exit surface,
Figure 5 a second cross-sectional view of the vehicle lamp element according to a further embodiment,
Figure 6 a stacked configuration of several vehicle lamp elements in a perspective view, and
Figure 7 the stacked configuration of several vehicle lamp elements in a front view.

In the following figures identical reference signs refer to identical features unless expressly depicted otherwise. The reference signs are only for informational purpose and do not delimit the scope of protection.

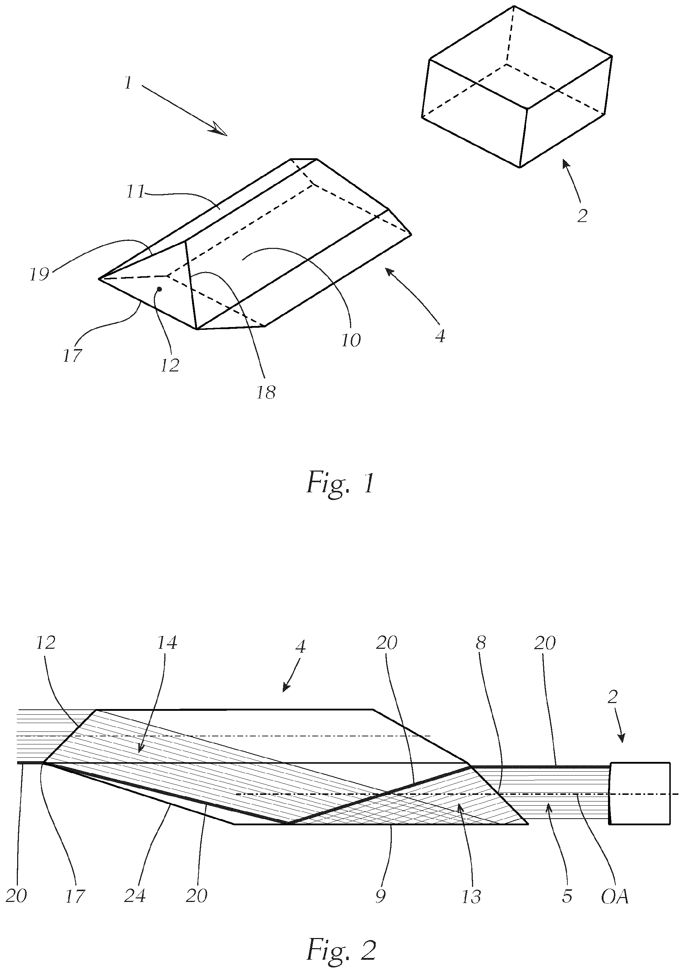

In the following the main parts of the vehicle lamp element 1 are described in the view of Figure 1, Figure 2, Figure 3, and Figure 4.

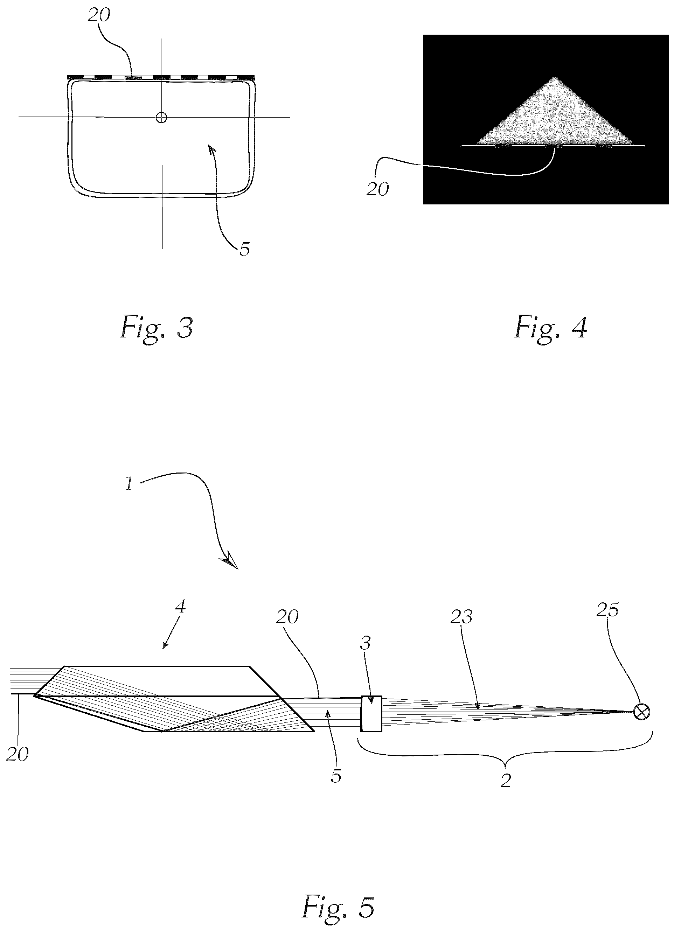

Figure 1 shows a vehicle lamp element 1 in a perspective view. The vehicle lamp element 1 comprises a light fixture 2 and an optical body 4. The light fixture 2 is configured to emit a collimated light beam 5. The collimated light beam 5 comprises a light dark boundary 20, shown in Figure 3, and can therefore be described as a truncated collimated light beam 5. This collimated light beam 5 is emitted with its light dark boundary 20 towards the optical body 4.

The optical body 4 can be made of a single light-transmissive material like polycarbonate, polymethyl methacrylate or silicon.

The optical body 4 comprises an entrance surface 8, a deflection surface 9, a first boundary surface 10, a second boundary surface 11 and an exit surface 12. The entrance surface 8 is directed to the light fixture 2 and inclined toward the deflection surface 9. The entrance surface 8 may be a curved surface but is preferably formed as a flat surface on the optical body 4.

As shown in Figure 2, the entrance surface 8 is configured to refract at least a part of the collimated light beam 5 including the light dark boundary 20 towards the deflection surface 9. Thus, the light propagates as a refracted light beam 13 from the entrance surface 8 in a light engineering point of view towards the deflection surface 9. Not necessarily the entire collimated light beam 5 is refracted by entrance surface 8. For example a part of the collimated light beam 5 may be shaded by shutter means (not shown). It is essential that the light dark boundary 20 of the collimated light beam 5 is refracted in a way such that said refracted light beam 13 comprises the light dark boundary 20 too.

The collimated light beam 5 may propagate in a main central direction OA, while the light fixture is aligned to the optical body 4 such that this main central direction OA is parallel to the deflection surface 9.

The deflection surface 9 may be a curved surface but is preferably formed as a flat surface on the optical body 4. The deflection surface 9 is configured to deflect at least a part of the refracted light beam 13 including the light dark boundary 20 towards the exit surface 12. Thus, the light propagates as a deflected light beam 14 from the deflection surface 9 in a light engineering point of view towards the exit surface 12. Not necessarily the entire refracted light beam 13 is deflected by the deflection surface 9. It is essential that the light dark boundary 20 of the refracted light beam 13 is deflected in a way, such that said deflected light beam 14 comprises the light dark boundary 20 too.

Preferably the deflection surface 9 is configured as flat surface that deflects at least a part of the refracted light beam 13 including the light dark boundary 20 by total internal reflection. The deflection surface 9 may additionally or alternatively be coated with a reflective layer.

The exit surface 12 is of triangular shape, comprising a base 17, a first leg 18 and a second leg 19. The exit surface 12 is inclined toward the deflection surface 9, adjacent with its first leg 18 to the first boundary surface 10 and adjacent with is second leg 19 to the second boundary surface 11. The first boundary surface 10 and the second boundary surface 11 form together a roof like structure on the optical body 4 while they are preferably formed as a flat surfaces on the optical body 4. The exit surface 12 is configured to refract at least a part of the deflected light beam 14 including the light dark boundary 20. Since the light rays of the deflected light beam 14 hitting the first boundary surface 10 or the second boundary surface 11 are totally internally reflected, for example, towards a connection surface 24, which is described later. Thus, they have no influence on the light output through the exit surface 12.

Although additional surfaces are possible it is preferred that, as shown, the first boundary surface 10 and the second boundary surface 11 are adjacent to the entrance surface 8, such that both, the first boundary surface 10 and the second boundary surface 11 connecting the entrance surface 8 and the exit surface 12.

The exit surface 12 may be a curved surface but is preferably formed as a flat surface on the optical body 4.. Furthermore the exit surface 12 may be textured. In such a case the exit surface 12 is configured to refract diffusely at least a part of the deflected light beam 14 including the light dark boundary 20. But preferably the exit surface 12 is formed as a flat surface on the optical body 4. The exit surface 12 preferably has the shape of an isosceles triangle. In such a case the first leg 18 and the second leg 19 are of the same length.

It is essential that the base 17 is, as shown, parallel to the light dark boundary 20 of the deflected light beam 14. Preferably the distance, seen at the exit surface 12, between the base 17 and the light dark boundary 20 of the deflected light beam 14 is less than 0.5 mm. This is of course a question of alignment between the optical body 4 and the light fixture 2, therefore the light fixture 2 is preferably aligned to the optical body 4 such that the base 17 is parallel to the light dark boundary 20 and preferably such that a distance between the base 17 and the light dark boundary 20 is obtained to the mentioned extend.

The angle between the entrance surface 8 and the deflection surface 9 as well as the angle between the exit surface 12 and the deflection surface 9 are preferably between 40° and 50°, particularly preferably between 44° and 46°. Preferably the angle between the entrance surface 8 and the deflection surface 9 is equal to the angle between the exit surface 12 and the deflection surface 9.

Preferably the normal vector of the entrance surface 8 and the normal vector of the exit surface 12 are perpendicular to each other.

The optical body 4 preferably further comprises the connection surface 24. In respect to the total surface area of the optical body 4, said connection surface 24 may connect the exit surface 12 and the deflection surface 9 while the angle between the connection surface 24 and the deflection surface 9 is greater or equal to 90°. The connection surface 24 may be a curved or stepped surface but is preferably a flat surface.

The vehicle lamp element may further comprise an additional optical element (not shown). Such an additional optical element may be arranged in light engineering point of view after the optical body 4, such that at least a part of the light refracted by the exit surface 12 propagates to and through the additional optical element. The additional optical element may be configured to scatter the light which was refracted by the exits surface 12.

Figure 4 shows a simulation result at the exit surface 12. Due to the structural features of the optical body 4 of the vehicle lamp element 1 it is possible to create homogeneously luminous area of a triangular light shape.

Figure 5 shows a further cross-sectional view of the vehicle lamp element 1. The light fixture 2 preferably comprises a light source 25 and a collimator 3. The light source 25 is configured to emit a light beam 23. Known light sources such as LEDs are feasible in this regard. The light fixture 2 may comprise additional elements like shutter elements (not shown) or coatings (not shown) on the collimator 3 to truncate the light beam 23. But preferably in addition to such elements or solely the collimator 3 is configured to collimate and truncate at least a part of the light beam 23 emitted from the light source 25 in order to form a truncated collimated light beam or in other words a collimated light beam 5, that comprises a light dark boundary 20.

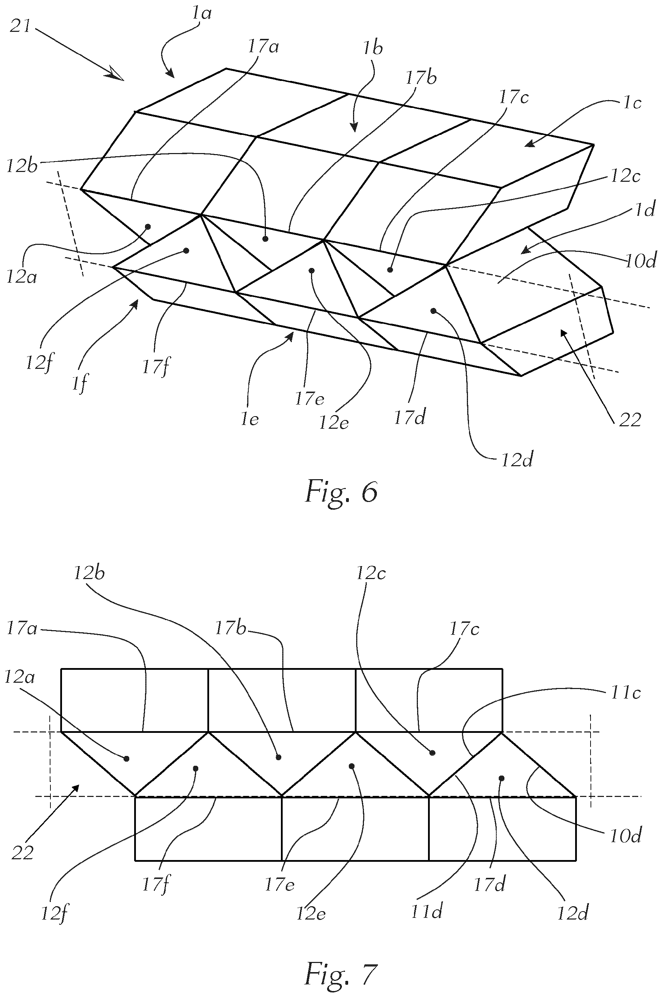

Figure 6 shows a stacked arrangement 21 of several vehicle lamp elements 1a, 1b, 1c, 1d, 1e, 1f to form a vehicle lamp system with a common light output section 22 between the bases 17a, 17b, 17c, 17d, 17e, 17f of all exit surfaces 12a, 12b, 12c, 12d, 12e, 12f. Figure 7 shows such a vehicle lamp system in a front view.

In the shown arrangement every second boundary surface 11c, 11d of every vehicle lamp element 1a, 1b, 1c, 1d, 1e, 1f contacts the second boundary surface 11c, 11d of its neighboring vehicle lamp element. But it is also possible that the second boundary surface 11c, 11d of at least one vehicle lamp element 1a, 1b, 1c, 1d, 1e, 1f faces the second boundary surface 11c, 11d of its neighboring vehicle lamp element 1a, 1b, 1c, 1d, 1e, 1f with a gap in between. It is further possible that every second boundary surfaces 11c, 11d of the vehicle lamp elements 1a, 1b, 1c, 1d, 1e, 1f faces the second boundary surface 11c, 11d of its neighboring vehicle lamp element 1a, 1b, 1c, 1d, 1e, 1f with a gap in between. The common output section 22 may be part of a turn indicator, a position light, a daytime running light or a taillight in a vehicle lamp system of a vehicle. It may be provided that the individual light fixtures (not shown in this figure) of the vehicle lamp elements 1a, 1b, 1c, 1d, 1e, 1f are separately controllable in order to selectively illuminate the exit surfaces 12a, 12b, 12c, 12d, 12e, 12f. In such a case it is possible to create dynamic light effects.

The invention is not limited to the embodiments shown but is defined by the entire scope of protection of the claims. Individual aspects of the invention or of the embodiments can also be taken up and combined with one another. For example, it can be provided that a common additional optical element (not shown) is arranged in front of the vehicle lamp system as shown in Figure 6 and Figure 7 to scatter the light propagating from the common output section 22. Any reference signs in the claims are exemplary and serve only the purpose to allow easier review without restricting the claims.

## Claims

1. Vehicle lamp element (1) comprising a light fixture (2) and an optical body (4),
wherein the light fixture (2) is configured to emit a collimated light beam (5) towards the optical body (4), said collimated light beam (5) comprises a light dark boundary (20),
wherein the optical body (4) comprises an entrance surface (8), a deflection surface (9), a first boundary surface (10), a second boundary surface (11) and an exit surface (12),
wherein the entrance surface (8) is inclined toward the deflection surface (9) and configured to refract at least a part of the collimated light beam (6) including the light dark boundary (20) as a refracted light beam (13) towards the deflection surface (9), such that said refracted light beam (13) comprises the light dark boundary (20),
wherein the deflection surface (9) is configured to deflect at least a part of the refracted light beam (13) including the light dark boundary (20) as a deflected light beam (14) towards the exit surface (12), such that said deflected light beam (14) comprises the light dark boundary (20),
wherein the exit surface (12) is of triangular shape with a base (17), a first leg (18) and a second leg (19), said exit surface (12) is inclined toward the deflection surface (9), adjacent with its first leg (18) to the first boundary surface (10), adjacent with its second leg (19) to the second boundary surface (11) and configured to refract at least a part of the deflected light beam (14) including the light dark boundary (20),
wherein the base (17) is parallel to the light dark boundary (20) of the deflected light beam (14).

2. Vehicle lamp element (1) according to claim 1, wherein the light fixture (2) comprises a light source (25) and a collimator (3), said light source (25) is configured to emit a light beam (23) and said collimator (3) is configured to collimate and truncate at least a part of the light beam (23) in order to form the collimated light beam (23) comprising the light dark boundary (20).

3. Vehicle lamp element (1) according to any of the preceding claims, wherein the triangular shape is an isosceles triangle, wherein the first leg (18) and the second leg (19) are of the same length.

4. Vehicle lamp element (1) according to any of the preceding claims, wherein the light fixture (2) is aligned to the optical body (4) such that the distance between the base (17) of the exit surface (12) and the light dark boundary (20) of the deflected light beam (14) at the exit surface is less than 0.5 mm.

5. Vehicle lamp element (1) according to any of the preceding claims, wherein the angle between the entrance surface (8) and the deflection surface (9) as well as the angle between the exit surface (12) and the deflection surface (9) are between 40° and 50°.

6. Vehicle lamp element (1) according to any of the preceding claims, wherein the normal vector of the entrance surface (8) and the normal vector of the exit surface (12) are perpendicular to each other.

7. Vehicle lamp element (1) according to any of the preceding claims, wherein the entrance surface (8), the deflection surface (9) and the exit surface (12) are flat surfaces.

8. Vehicle lamp element (1) according to any of the preceding claims, wherein the first boundary surface (10) and the second boundary surface (11) are adjacent to the entrance surface (8), such that both, the first boundary surface (10) and the second boundary surface (11) connecting the entrance surface (8) and the exit surface (12).

9. Vehicle lamp element (1) according to any of the preceding claims, wherein the optical body (4) comprises further a connection surface (24) which connects the exit surface (12) and the deflection surface (9), wherein the angle between said connection surface (24) and the deflection surface (9) is greater or equal to 90°.

10. Vehicle lamp element (1) according to any of the preceding claims, wherein the exit surface (12) is textured, such that the exit surface (12) is configured to refract diffusely at least a part of the deflected light beam (14) including the light dark boundary (20).

11. Vehicle lamp element (1) according to any of the preceding claims, wherein the vehicle lamp element (1) comprises additionally an optical element that is arranged after the optical body (4) from a light engineering of view, wherein said optical element (4) is configured to scatter the light, which is refracted by the exit surface (12).

12. Vehicle lamp system comprising several vehicle lamp elements (1, 1a, 1b, 1c) according to any of the preceding claims, wherein the vehicle lamp elements (1, 1a, 1b, 1c) are stacked next to each other, such that neighboring vehicle lamp elements (1, 1a, 1b, 1c) form together a common light output section (22) and such that at least either the base (17), the first leg (18) or the second leg (19) of each vehicle lamp element (1, 1a, 1b, 1c) is adjacent to a neighboring vehicle lamp element (1, 1a, 1b, 1c).

13. Vehicle lamp system according to claim 12, wherein the second boundary surface (11, 11c, 11d) of at least one vehicle lamp element (1, 1a, 1b, 1c) of the vehicle lamp system faces the second boundary surface (11, 11c, 11d) of a neighboring vehicle lamp element (1, 1a, 1b, 1c), preferably the second boundary surface (11, 11c, 11d) of every vehicle lamp element (1, 1a, 1b, 1c) faces the second boundary surface (11, 11c, 11d) of its neighboring vehicle lamp element (1, 1a, 1b, 1c).

14. Vehicle lamp system according to claim 12 or claim 13, wherein the second boundary surface (11, 11c, 11d) of the at least one vehicle lamp element (1, 1a, 1b, 1c) contacts the second boundary surface (11, 11c, 11d) of a neighboring vehicle lamp element (1, 1a, 1b, 1c), preferably the second boundary surface (11, 11c, 11d) of every vehicle lamp element (1, 1a, 1b, 1c) contacts the second boundary surface (11, 11c, 11d) of its neighboring vehicle lamp element (1, 1a, 1b, 1c).

15. Vehicle comprising at least one vehicle lamp element (1) according to any of the claims 1 to 11 or comprising at least one vehicle lamp system according to any of the claims 12 to 14.
